(19) Europäisches Patentamt
European Patent Office
Office européen des brevets

(11) EP 2 520 952 B1

(12) EUROPÄISCHE PATENTSCHRIFT

(45) Veröffentlichungstag und Bekanntmachung des Hinweises auf die Patenterteilung:
19.08.2015  Patentblatt 2015/34

(51) Int Cl.:
*G01V 8/12* (2006.01)

(21) Anmeldenummer: 12163425.7

(22) Anmeldetag: 05.04.2012

(54) **Optoelektronischer Sensor und Verfahren zur Objektfeststellung**

Opto-electronic sensor and object detection method

Capteur optoélectronique et procédé de détection d'objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2011  DE 102011050119**

(43) Veröffentlichungstag der Anmeldung:
**07.11.2012  Patentblatt 2012/45**

(73) Patentinhaber: **Sick AG**
**79183 Waldkirch (DE)**

(72) Erfinder:
• **Waslowski, Kai**
  **79312 Emmendingen (DE)**
• **Merettig, Gerhard**
  **79350 Sexau (DE)**
• **Hauske, Maximilian**
  **68165 Mannheim (DE)**
• **Fetzner, Angelika**
  **79131 Karlsruhe (DE)**
• **Opalko, Oliver**
  **76131 Karlsruhe (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
EP-A1- 2 199 822       DE-A1-102009 026 716
US-A1- 2002 171 848    US-A1- 2006 200 903

**Beschreibung**

Die Erfindung betrifft einen optoelektronischen Sensor und ein Verfahren zur Objektfeststellung nach dem Oberbegriff von Anspruch 1 beziehungsweise 11.

Zahlreiche optoelektronische Sensoren arbeiten mit dem Prinzip, einen Sendelichtstrahl aktiv auszusenden und in einem Detektor wieder zu empfangen. Ein sehr häufig eingesetzter derartiger Sensor ist eine Lichtschranke, welche die Anwesenheit eines Objekts daran feststellt, ob der Lichtstrahl unterbrochen ist oder nicht, und ein entsprechendes Schaltsignal ausgibt. Lichtschranken sind als Einweglichtschranken bekannt, in denen der Lichtempfänger dem Lichtsender gegenüber angeordnet ist und der Lichtstrahl dazwischen einen Überwachungsbereich aufspannt. Weiterhin gibt es Reflexionslichtschranken, in denen Lichtsender und Lichtempfänger auf der gleichen Seite angeordnet sind und der Lichtstrahl mit Hilfe eines Reflektors, häufig eines Retroreflektors, zurückgeworfen wird und somit den Überwachungsbereich zweimal durchquert. Ähnlich wie eine Reflexionslichtschranke ist ein Lichttaster aufgebaut, wobei der Lichttaster nicht auf einen kooperativen Reflektor, sondern in den freien Raum gerichtet ist, und somit in Umkehrung des Lichtschrankenprinzips Sendelicht gerade dann empfängt, wenn ein Objekt in den Sendestrahl tritt. Für alle diese Sensortypen ist auch bekannt, mehrere Sensoren parallel zueinander anzuordnen und so ein Lichtgitter oder ein tastendes Lichtgitter zu bilden.

Der Sensor erkennt eine Strahlunterbrechung durch eine Schwellbewertung des Empfangssignals. Wenn das Empfangssignal nahe an der Schwelle liegt, können schon kleinste Signalschwankungen ein Schaltsignal auslösen, und dies führt dann zu einem unerwünschten mehrfachen Schalten. Deshalb erfolgt die Schwellbewertung mit einer Hysterese, die dafür sorgt, dass nur entsprechend ausgeprägte Signaländerungen ein Schaltereignis auslösen.

Eine weitere Störquelle ist die Verschmutzung der Frontscheibe des Sensors im laufenden Betrieb, wodurch das Empfangssignal abhängig vom in der Regel zunächst unbekannten Grad der Verschmutzung abgeschwächt wird. Dadurch kann eine statische, ab Werk oder bei der Montage eingestellte Schaltschwelle auch bei objektfreiem Lichtstrahl unterschritten werden, und es treten Fehlschaltungen auf.

Daher wäre es hilfreich, die Schaltschwelle in Abhängigkeit vom Verschmutzungsgrad adaptiv nachzuführen. Es ist aber für den Sensor nicht klar, ob ein Abfall des Empfangssignals auf eine Verschmutzung oder ein teilweise den Lichtstrahl abdeckendes Objekt zurückzuführen ist. Deshalb fehlt es an einem geeigneten Maß für die Anpassung der Schaltschwelle.

In der EP 0 891 044 B1 werden mehrere Schaltschwellen gesetzt. Im Betrieb wird dann gezählt, wie oft die jeweilige Schaltschwelle ein Schaltereignis auslöst, und abhängig davon werden die Schaltschwellen nachgestellt. Dieses Vorgehen dient dazu, einer Verschmutzung zu begegnen. Damit wird prinzipiell eine Unterscheidung zwischen einer vorübergehenden Teilabdeckung des Lichtstrahls und einem Signalverlust aufgrund von Verschmutzung ermöglicht, allerdings ist dieses Verfahren in der Robustheit der Nachregelung begrenzt.

Aus der EP 2 199 822 A1 ist ein optischer Sensor bekannt, der oszillierendes Sendelicht verwendet. Bei steigendem Fremdlichtanteil wird die Bewertungsschwelle des Sensors angehoben. Um den Fremdlichtanteil zu beurteilen, wird dessen Standardabweichung um einen Mittelwert bestimmt.

Es ist daher Aufgabe der Erfindung, in einem Sensor der eingangs beschriebenen Art eine zuverlässigere Erkennung von Schaltereignissen zu ermöglichen.

Diese Aufgabe wird durch einen optoelektronischen Sensor und ein Verfahren zur Objektfeststellung nach Anspruch 1 beziehungsweise 11 gelöst. Dabei geht die Erfindung von dem Grundgedanken aus, das Empfangssignal als Zeitreihe aufzufassen und außer der Amplitude zusätzliche Informationen von deren Verteilung auszuwerten. Dazu werden Merkmalsvektoren in einem Merkmalsraum gebildet, der von zumindest zwei Momenten, vorzugsweise den ersten beiden Momenten der Verteilung aufgespannt ist. Aufgrund der zusätzlichen Dimension des Merkmalsraums ist dabei eine viel genauere Aussage über das Verhalten von Objekten in dem Überwachungsbereich möglich.

Bei einer Normalverteilung des Empfangssignals genügen die beiden ersten Momente, also Mittelwert und Varianz, zur vollständigen Beschreibung, und der Merkmalsraum ist zweidimensional. Abweichungen von einer Normalverteilung können durch höhere Momente und einen entsprechend höherdimensionalen Merkmalsraum berücksichtigt werden. Der Mittelwert ist das direkte Maß des Empfangssignals und damit geeignet, zwischen dem ersten und zweiten Zustand zu differenzieren, erlaubt aber keinen eindeutigen Schluss auf die Ursache eines Empfangssignalabfalls. In den über gewisse Zeitintervalle stationären ersten und zweiten Zuständen ist die Varianz gering, dagegen in dem dynamischen dritten Übergangszustand hoch. In der Kombination sind deshalb die beiden Merkmale Mittelwert und Varianz gute Klassifikationskriterien.

Die Erfindung hat den Vorteil, dass zusätzliches Wissen über das System gewonnen wird und damit ein verbessertes Schaltverhalten erreicht werden kann. Damit wird eine robuste Objektdetektion auch in besonderen Situationen ermöglicht. Dazu zählt die Erkennung transparenter Objekte, besonders unter Berücksichtigung einer Verunreinigung der optischen Wege des Sensors. Die Detektionsschwelle muss nämlich bei transparenten Objekten gegenüber undurchsichtigen Objekten sehr eng gesetzt werden. Wenn dann noch eine Signalbeeinträchtigung durch Verschmutzung hinzukommt, ist eine zuverlässige Objekterkennung nur noch mit den zusätzlichen Merkmalen möglich, die durch die Erfindung erschlossen werden.

In dem Merkmalsraum unterteilt vorzugsweise ein Klassifikator die Merkmalsvektoren in Zustände und leitet daraus das Schaltsignal ab. So können Informationen mehrerer Merkmalsvektoren zusammengefasst, und daraus kann ein zuverlässiges Schaltsignal unter Ausnutzung der zusätzlichen Dimensionen des Merkmalsraums abgeleitet werden.

Dem Klassifikator ist bevorzugt vorab die Anzahl der Zustände sowie für jeden Zustand ein Startwert vorgegeben, insbesondere in Form eines Zentroids als Punkt in dem Merkmalsraum. Durch das Vorwissen um die Anzahl von Klassen oder Zuständen wird die Zuverlässigkeit des Klassifikators erhöht. Darüber hinaus können auch gute Anfangswerte vorgegeben werden, die etwa einem Sensor ohne Verschmutzung oder einer früheren Klassifikation entsprechen. Ein beispielhafter Klassifikator nach diesem Prinzip ist als k-means-Algorithmus bekannt. Die Klassen werden jeweils durch einen Punkt $\mu$, $\sigma^2$ in dem Merkmalsraum charakterisiert, der den Schwerpunkt seiner Klasse bildet und als Zentroid bezeichnet wird. Vor der Klassifikation erfolgt nochmals bevorzugt eine Normierung, damit die Merkmale gleichgewichtet Berücksichtigung finden. Eine beispielhafte Normierung ist die min-max-Normierung mit einem Wertebereich [0;1].

Der Klassifikator ordnet bevorzugt die Merkmalsvektoren jeweils demjenigen Zentroid und damit dessen Zustand zu, zu dem der Merkmalsvektor den kürzesten Abstand in dem Merkmalsraum aufweist, und bestimmt dann, wenn alle Merkmalsvektoren einem Zentroid zugeordnet sind, neue Zentroide als Schwerpunkt aller jeweils einem bisherigen Zentroid zugeordneten Merkmale. Jeder Merkmalsvektor wird damit der nächstliegenden Klasse zugeordnet, wobei der Abstand mit jeder bekannten Norm gemessen wird, etwa der euklidischen Norm. Anschließend wird der Schwerpunkt aller Merkmalsvektoren, die dann eine Klasse bilden, als neues Zentroid festgelegt. Dieses Wechselspiel aus Zuordnung der Merkmalsvektoren zu einem Zentroid und anschließender Anpassung des Zentroids wird iteriert. Es ist gesichert, dass das Verfahren konvergiert, jedoch ist eine lokale statt einer globalen Konvergenz nicht ausgeschlossen. Das Vorgehen eignet sich besonders, weil das Vorwissen der benötigten Klassifikation sowie die Trennschärfe der Merkmale hoch und die Anzahl der Klassen gering ist, so dass mit wenig Rechenaufwand zuverlässige Ergebnisse erzielt werden.

Der Klassifikator ist bevorzugt dafür ausgebildet, in dem Merkmalsraum einen ersten Zustand mit von einem erfassten Objekt abgedecktem Lichtstrahl, einen zweiten Zustand mit freiem Lichtstrahl ohne erfasstes Objekt und einen dritten Zustand für ein während des Ein- oder Ausfahrens in den Lichtstrahl teilweise erfasstes Objekt zu unterscheiden. Durch Klassifikation von Ereignissen in zwei Zustände, die den eigentlich zu detektierenden Schaltereignissen eines objektfreien und eines durch ein Objekt unterbrochenen Lichtstrahls entsprechen, und einen dritten Übergangszustand werden zuverlässige Empfangssignalpegel für die beiden Schaltereignisse gemessen. Es wird also möglich, zwischen einer Verschmutzung und einer teilweisen Abdeckung durch ein ein- oder ausfahrendes Objekt zu unterscheiden. Die Lage der beiden Klassen der ersten und zweiten Zustände bildet dabei auch die Grundlage für eine Schwellwertanpassung. Es wird dann verhindert, dass die Schwellen versehentlich auf ein ein- oder ausfahrendes Objekt statt auf die sich damit überlagernde Verschmutzung adaptieren. Damit wird insgesamt die Schaltzuverlässigkeit und die Genauigkeit des Schaltzeitpunkts verbessert und robuster gegen Umwelt- und Verschleißeinflüsse.

Die Auswertungseinheit ist bevorzugt dafür ausgebildet, das Empfangssignal mit einer Schaltschwelle zu bewerten und die Schaltschwelle adaptiv an die Lage der Merkmalsvektoren in dem ersten Zustand und/oder zweiten Zustand anzupassen. Die Lage der Merkmalsvektoren wird beispielsweise durch Projektion des Schwerpunkts aller Merkmalsvektoren eines Zustands im Merkmalsraum auf die Achse des Mittelwerts beschrieben. Durch die Schwellwertanpassung können Verschmutzungseffekte, ein Leistungsabfall des Lichtsenders und ähnliche Beeinträchtigungen ohne Verlust an Detektionsleistung kompensiert werden. Die Klassifikation dient in diesem Fall dazu, den Übergangszustand zu erkennen und zu verhindern, dass die Schaltschwelle fälschlich auf Ereignisse dieses Zustands adaptiert wird. Die eigentliche Objektdetektion und damit das Ableiten des eigentlichen Schaltereignisses erfolgt durch eine einfache Schwellbewertung, die schaltrelevanten Zustände machen also in dieser Ausführungsform von der zusätzlichen Dimension des Merkmalsraums keinen direkten Gebrauch. Eine Schwellbewertung hat den Vorteil, dass dies sehr rasch auf einfachem Weg zu einer Schaltentscheidung führt.

Die angepasste Schaltschwelle wird nochmals bevorzugt in die Mitte zwischen den Mittelwerten der Merkmalsvektoren in dem ersten Zustand und dem zweiten Zustand oder nahe an den Mittelwert der Merkmalsvektoren des zweiten Zustands gelegt. Der Schwellwert kann somit an die konkrete Anwendung angepasst werden. Eine mittige Schwelle ist besonders stabil gegen kleinere Signalschwankungen. Eine Schwelle nahe am oberen Empfangssignalpegel des zweiten Zustands reagiert auch schon auf kleine oder transparente Objekte. In beiden Fällen verbleibt eine hohe Funktionsreserve.

Die Schwellbewertung erfolgt bevorzugt mit einer Hysterese. Damit wird ein rasches Umschalten durch Schwankungen des Empfangssignalpegels nahe am Schaltpunkt verhindert. Die Hysterese kann beispielsweise dadurch realisiert werden, dass zwischen einer Schwellüberschreitung von unten und von oben differenziert und ein gewisser Zusatzabstand zu der Hauptschwelle ohne Hysterese gefordert wird. Äquivalent dazu sind zwei unterschiedliche Schwellen für eine Schwellüberschreitung von unten und von oben. Besonders bevorzugt ist die Auswertungseinheit dafür ausgebildet, den Hystereseabstand an die Lage der Merkmalsvektoren in dem ersten Zustand und/oder dem zweiten Zustand anzupassen. Damit wird der Hystereseabstand mit der Hauptschwelle mitskaliert. Auch die Hysterese und deren Anpassung kann im Übrigen in Abhängigkeit von der Anwendung gewählt werden, also beispielsweise Größe, Geschwindigkeit oder Transparenz der zu erfassenden Objekte.

Die Auswertungseinheit ist bevorzugt dafür ausgebildet, das Schaltsignal anhand einer Bewertung der Merkmalsvektoren mit einer mehrdimensionalen Schwelle aufzufinden. Die mehrdimensionale Schwelle erfasst somit Eigenschaften der Merkmalsvektoren in den relevanten Dimensionen des Merkmalsraums. Durch die zusätzlichen Dimensionen wird eine wesentlich zuverlässigere Schaltinformation möglich als bei herkömmlicher eindimensionaler Bewertung des Pegels. Man kann eine mehrdimensionale Schwelle auch so verstehen, dass hierdurch Bereiche in dem Merkmalsraum abgegrenzt werden, die man auch wieder als Klasse verstehen kann. In dieser Sichtweise fallen die Begriffe Klassifikation und mehrdimensionale Schwellbewertung zusammen.

Der Klassifikator ist bevorzugt dafür ausgebildet, in dem Merkmalsraum zumindest einen ersten Zustand mit freiem Lichtstrahl ohne erfasstes Objekt bei einem ersten Moment der Zeitreihe nahe einem maximalen Empfangspegel und einem kleinen zweiten Moment der Zeitreihe zu identifizieren, wobei von der Auswertungseinheit als binäres Schaltsignal das Vorliegen oder Nichtvorliegen des ersten Zustands ausgebbar ist. Der erste Zustand wird damit beispielsweise oberhalb einer Mittelwert- und unterhalb einer Varianzschwelle vorgegeben. Wird dieser Zustand verlassen, so löst dies ein Schaltereignis aus, und zwar so lange, bis der Zustand wieder erreicht ist. Aufgrund der zusätzlichen Forderung einer kleinen Varianz an den ersten Zustand kann dabei ein freier Lichtweg von Transienten unterschieden werden, wie dem teilweisen Durchfahren von Objekten oder teiltransparenten Objekten.

Der Klassifikator ist bevorzugt dafür ausgebildet, in dem Merkmalsraum mehrere Bereiche jeweils einem Zustand zuzuordnen, wobei die Auswertungseinheit eine vorgegebene Abfolge der Zustände erwartet und das binäre Schaltsignal in Abhängigkeit davon ausgibt, welche Teilsequenz der Abfolge momentan durchlaufen wird. Im Gegensatz zu einer einfachen Schwellbewertung wird hierbei also der Schaltzustand aus den von dem Klassifikator unterschiedenen Zuständen abgeleitet. Ein Objekt gilt dann beispielsweise als erkannt, wenn bestimmte Zustände wie "Objekt im Lichtstrahl", "objektfrei" und "Übergangszustand" in einer bestimmten zeitlichen Abfolge auftreten. Diese Forderung erlaubt eine wesentlich robustere Objekterkennung und nutzt die zusätzlichen Informationen aus den weiteren Dimensionen des Merkmalsraums. Gegenüber einer Schaltschwelle vergrößert sich die Ansprechzeit, da für die Ermittlung der höheren Momente, wie der Varianz, eine Vielzahl von Messwerten benötigt wird.

Der Klassifikator ist bevorzugt dafür ausgebildet, den Merkmalsraum bis zu einem maximalen ersten Moment und einem maximalen zweiten Moment in Bereiche zu unterteilen, insbesondere rechteckige Bereiche, und jedem Bereich einen Zustand zuzuordnen. Das ist eine besonders einfache Form, eine vorgegebene Abfolge von Zuständen festzulegen. Der relevante Bereich des Zustandsraums wird diskret aufgeteilt, und die Abfolge wird auf dieser Basis vorgegeben oder eingelernt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine Blockdarstellung eines erfindungsgemäßen optoelektronischen Sensors;

Fig. 2     einen beispielhaften zeitlichen Verlauf des Empfangssignals zur Erläuterung von drei erfindungsgemäß zu differenzierenden Zustände in einer Ausführungsform der Erfindung;

Fig. 3     eine Darstellung des Merkmalsraums mit der Lage der drei den Zuständen aus Figur 2 entsprechenden Cluster;

Fig. 4     eine Ansicht analog Figur 3 zur Erläuterung des Vorgehens bei einer möglichen Art der Klassifikation;

Fig. 5a    einen beispielhaften zeitlichen Verlauf des Empfangssignals zur Erläuterung der Auswirkungen von Verschmutzung;

Fig. 5b    eine Darstellung des Merkmalsraums und der Verschiebung der drei den Zuständen entsprechenden Cluster aus Figur 4 bei zunehmender Verschmutzung; und

Fig. 6     eine Übersichtsdarstellung zur Klassifikation und Schwellwertadaption;

Fig. 7     im oberen Teil einen weiteren beispielhaften zeitlichen Verlauf des Empfangsignals bei einem transparenten Objekt im Strahlengang und im unteren Teil den zeitlichen Verlauf des zugehörigen Schaltsignals;

Fig. 8     eine schematische Darstellung des Merkmalsraums mit vier Zuständen, welche bei dem Signalverlauf gemäß Figur 7 in einer erfindungsgemäßen Ausführungsform unterschieden werden; und

Fig. 9     eine schematische Darstellung des Merkmalsraums mit einer verallgemeinerbaren diskreten Aufteilung in neun Zustände.

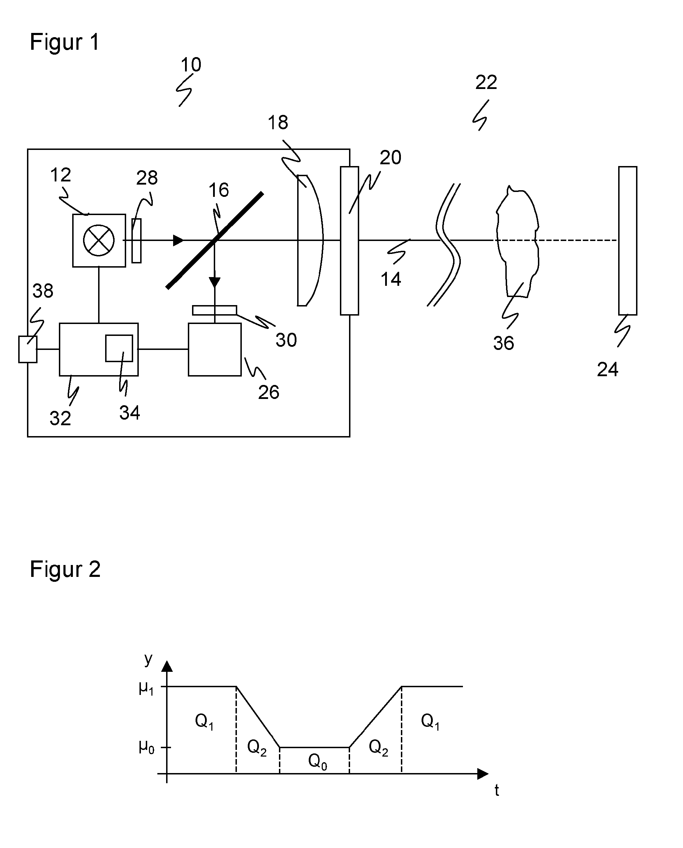

Figur 1 zeigt eine Blockdarstellung einer Ausführungsform eines erfindungsgemäßen Sensors 10 als Reflexionslichtschranke. Die Erfindung ist aber nicht auf Reflexionslichtschranken beschränkt und insbesondere auch bei Einweglichtschranken und den anderen einleitend genannten Sensortypen einsetzbar.

Der Sensor 10 weist einen Lichtsender 12 mit einer Lichtquelle auf, beispielsweise einem Laser oder einer LED, und ist in der Lage, einen Sendelichtstrahl 14 zu erzeugen, der einen Teilerspiegel 16 passiert und über eine Optik 18 gebündelt wird. Der Sendelichtstrahl 14 tritt durch eine Frontscheibe 20 aus, passiert einen Überwachungsbereich 22, trifft dann auf einen jenseits angeordneten Reflektor 24, insbesondere einen Retroreflektor, und kehrt zu dem Sensor 10 zurück. Nach erneuter Strahlformung in der Optik 18 wird der zurückkehrende Sendelichtstrahl 14 an dem Teilerspiegel 16 reflektiert und in einem Lichtempfänger 26 registriert, beispielsweise einer Photodiode oder einem pixelaufgelösten Matrixbildsensor. Um das eigene Licht des Sensors 10 besser von Fremdlicht zu unterscheiden, sind dem Lichtsender 12 und dem Lichtempfänger 26 optional Polfilter 28, 30 zugeordnet.

Der einfallende Sendelichtstrahl 14 wird in dem Lichtempfänger 26 in ein elektrisches Empfangssignal umgewandelt, welches von einer Auswertungseinheit 32 mit einem Klassifikator 34 ausgewertet wird. Befindet sich ein transparentes oder undurchsichtiges Objekt 36 in dem Überwachungsbereich 22, welches den Sendelichtstrahl 14 unterbricht, so fällt weniger oder kein Licht auf den Lichtempfänger 26. Die Auswertungseinheit 32 erkennt auf diese Weise die Anwesenheit oder Abwesenheit eines Objekts 36 in dem Überwachungsbereich 22. Dabei werden in verschiedenen Ausführungsformen der Erfindung eine aus dem Empfangssignal abgeleitete Detektionsgröße mit einer Schwelle bewertet oder von dem Klassifikator 34 bereitgestellte Zustände untersucht, um ein binäres Schaltsignal zu erhalten, dessen beide Zustände einem Objekt 36 oder keinem Objekt 36 in dem von dem Sendelichtstrahl 14 aufgespannten Überwachungsbereich 22 entsprechen. Dieses Schaltsignal wird auf einen Ausgang 38 gelegt. Um ein rasches Hin- und Herschalten bei einem Empfangssignalpegel in der Nähe der Schaltschwelle zu vermeiden, erfolgt die Bewertung mit einer Hysterese.

Figur 2 zeigt einen beispielhaften zeitlichen Verlauf der mit y bezeichneten, aus dem Empfangssignal des Sensors 10 abgeleiteten Detektionsgröße zur Erläuterung des System- und Signalmodels, das der erfindungsgemäßen Auswertung zugrunde liegt. Bei regelmäßigem Pulsbetrieb oder Dauerstrichbetrieb des Lichtsenders 18 kann unmittelbar die Amplitude des Empfangssignals als Detektionsgröße y verwendet werden. Bei der bevorzugten Verwendung mit einer codierten Sendefolge, beispielsweise mit Pseudozufallscodes, wird eine entsprechende Detektionsgröße y durch geeignete Signalverarbeitung gewonnen, beispielsweise Korrelation, Matched Filterung oder Integration.

Abstrakt wird dabei aus einer Schwellbewertung ein Hypothesentest, welcher der Detektionsgröße y eine diskrete binäre Ausgangsgröße z mit den möglichen Werten $Q_0$="Objekt" oder $Q_1$="kein Objekt" zuordnet. Dabei liegt die Detektionsgröße y im Zustand $Q_0$ mit vollständig eingefahrenem Objekt 36 auf Lowlevel $\mu_0$ und im Zustand $Q_1$ ohne Objekt 36 auf Highlevel $\mu_1$.

Wie aus Figur 2 ersichtlich, sieht das Modell einen zusätzlichen dritten Übergangszustand $Q_2$ vor, in dem das Objekt 36 ein- oder ausfährt und dabei den Sendelichtstrahl 14 nur teilweise verdeckt. Die während der Ein- und Ausfahrbewegung im Zustand $Q_2$ entstehenden Transienten überlagern sich mit einer Dämpfung des Highlevels $\mu_1$ des Empfangssignals beispielsweise durch Verschmutzung der Optik 18, der Frontscheibe 20 oder Nachlassen der Ausgangsleistung des Lichtsenders 12. Erfindungsgemäß wird die durch die genannten Effekte veränderte Detektionsstatistik geschätzt, um eine Unterscheidung zwischen einer solchen betriebsbedingten Dämpfung und dem Zustand $Q_2$ vorzunehmen und somit die Bewertungsschwelle der Auswertungseinheit 32 anzupassen.

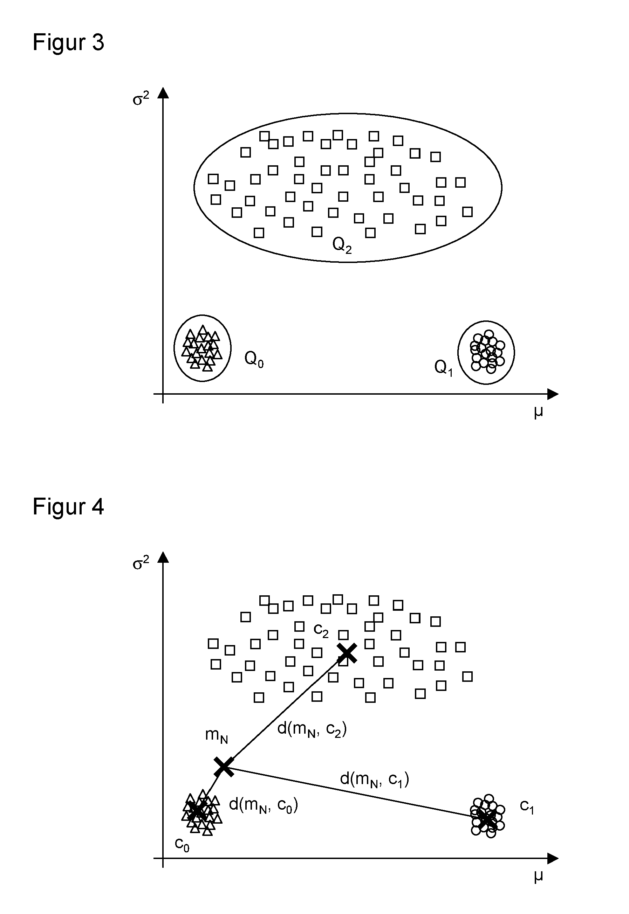

Anhand der Figuren 3 bis 5 wird nun die Erkennung der Zustände $Q_0$ bis $Q_2$ und eine davon abgeleitete Schwellenadaption erläutert. Dazu wird eine Zeitreihe der Detektionsgröße y klassifiziert. Es wird also eine Vielzahl von Datenpunkt y[i] aus dem Verlauf des Empfangssignals gewonnen. Beispielsweise entspricht jeder Datenpunkt y[i] einer Abtastung des mit einer Abtastfrequenz A/D-gewandelten Empfangssignals oder, bei Verwendung von Pseudozufallscodes, einer Entsprechung nach der Decodierung.

Die Klassifikation erfolgt in einem Merkmalsraum mit Methoden der Mustererkennung. Dazu wird zunächst ein mehrdimensionaler Merkmalsraum definiert, der von den Momenten der Zeitreihe y[i] aufgespannt wird. Unter der Modellannahme, dass das ungestörte, reine Empfangssignal lediglich von additivem weißem Rauschen mit konstanter Varianz überlagert ist, genügen die beiden ersten Momente, also Mittelwert $\mu$ und Varianz $\sigma^2$, um alle relevanten Informationen aus der Zeitreihe y[i] zu extrahieren. Dabei ergeben sich Merkmalsvektoren $m=[\mu, \sigma^2]^T$ mit den üblichen Definitionen

$$\mu = \frac{1}{N}\sum_{i=1}^{N} y[i], \quad \sigma^2 = \frac{1}{N}\sum_{i=1}^{N}(y[i]-\mu)^2$$

für Mittelwert und Varianz bei einer Zeitreihe mit N Datenpunkten. Dabei werden Mittelwert und Varianz in einem mitbewegten Fenster berechnet, so dass jeder neue Datenpunkt y[i] zu einem neuen Merkmalsvektor m[i] führt. Damit wird nach einem kurzen Einschwingintervall von N-1 Datenpunkten y[i] die Zeitreihe y[i] in eine Punkteschar von Merkmalsvektoren m[i] überführt. Andere Bündelungen von Datenpunkten y[i] sind denkbar, beispielsweise indem aus jeweils N eigenen Datenpunkte y[i] ein Merkmalsvektor m bestimmt wird. Dadurch wird aber die Anzahl von Merkmalsvektoren m je Zeiteinheit verringert. Alternativ zu einem zweidimensionalen Merkmalsraum können nicht gaussische statistische Einflüsse durch Einführen höherer Momente modelliert werden.

Figur 3 zeigt den Merkmalsraum für Merkmalsvektoren m[i] zu einer beispielhaften Zeitreihe y[i] des Empfangssignals. Die Varianz $\sigma^2$ ist im Übergangszustand $Q_2$ deutlich größer als in den quasistationären Zuständen $Q_0$ und $Q_1$. Weiterhin zeichnen sich der Zustand $Q_0$ durch einen kleinen Mittelwert und der Zustand $Q_1$ durch einen großen Mittelwert aus. Demnach bilden sich deutliche, gut voneinander unterscheidbare Cluster im Merkmalsraum aus, wobei Merkmalsvektoren m[i] des ersten Zustands $Q_0$ mit Dreiecken, des zweiten Zustands $Q_1$ mit Kreisen und des dritten Zustands $Q_2$ mit Quadraten gekennzeichnet sind. Die Situation in Figur 3 ist insofern idealisiert, als bei realen Daten auch deutlich geringere Abstände zwischen den Clustern möglich sind.

Um unerwünschte Gewichtungen der Merkmale zu vermeiden, werden die Merkmale vorab normiert. Dazu kann beispielsweise die min-max-Normierung

$$m_N = \frac{m - \min_m}{\max_m - \min_m}$$

verwendet werden, um den Wertebereich der normierten Merkmale $M_N[i]$ auf [0; 1] zu begrenzen.

Figur 4 erläutert, wie die Cluster der Figur 3 durch Klassifikation aus einer beliebigen Punkteschar von normierten Merkmalsvektoren $m_N[i]$ entstehen. Die Erklärung erfolgt anhand des sogenannten k-means-Klassifikators, der als einfacher, mit wenig Rechenund Speicherkapazität implementierbarer Algorithmus für die vorliegende Situation bei wenigen, vorab bekannten Klassen und guten Vorkenntnissen über die Klasseneigenschaften besonders gut geeignet ist. Alternativ können andere Klassifikatoren eingesetzt werden. Weitere allgemeine Algorithmen zur Mustererkennung und Klassifikation sind beispielsweise in CH. Bishop: "Pattern Recognition and Machine Learning", Springer, 2006 oder R. Duda et al.: "Pattern Classification", Wiley, 2001 zu finden.

Bei dem k-means-Klassifikator wird jede Klasse oder jeder Zustand $Q_0$-$Q_2$ durch den als Zentroid $c_k$, k=0...2 bezeichneten Schwerpunkt bezüglich einer Metrik im Merkmalsraum repräsentiert. Die Metrik kann dabei auf einer beliebigen Norm basieren, etwa der euklidischen Norm. Es werden zunächst Anfangswerte für die Zentroide $c_k$ vorgegeben. Das ist leicht und mit recht großer Vorhersagekraft möglich, da für $c_0$ ein geringer Mittelwert $\mu$ und eine geringe Varianz $\sigma_2$, für $c_1$ ein hoher Mittelwert $\mu$ und eine geringe Varianz $\sigma_2$ und für $c_2$ ein nahezu beliebiger Mittelwert $\mu$ zwischen Lowlevel $\mu_0$ und Highlevel $\mu_1$ bei hoher Varianz $\sigma_2$ erwartet wird. Im späteren Betrieb könne für $c_k$ alternativ auch früher ermittelte Werte vorgegeben werden.

Um nun einen Merkmalsvektor $m_N[i]$ zu klassifizieren, wird mit der Metrik d des Merkmalsraums der Abstand $d(m_N[i], c_k)$ für alle Zentroide $c_k$ berechnet, und der Klassifikator ordnet den Merkmalsvektor $m_N[i]$ dem Zustand $Q_k$ mit dem geringsten Abstand zu. Sind alle Merkmalsvektoren $m_N[i]$ einem Zustand $Q_k$ zugeordnet, so werden neue Zentroide $c_k$ als Schwerpunkt aller Merkmalsvektoren des jeweiligen Zustands $Q_k$ berechnet. Dieses Wechselspiel aus Bestimmung neuer Zentroide $c_k$ und Zuordnung der Merkmalsvektoren $m_N[i]$ zum nächstgelegenen Zentroid wird iteriert, bis eine Abbruchbedingung erreicht ist. Diese Abbruchbedingung kann beispielsweise in der festen Vorgabe einer Anzahl von Iterationen oder einem Höchstmaß bestehen, um das sich die Zentroide $c_k$ von Iteration zu Iteration noch verschieben dürfen.

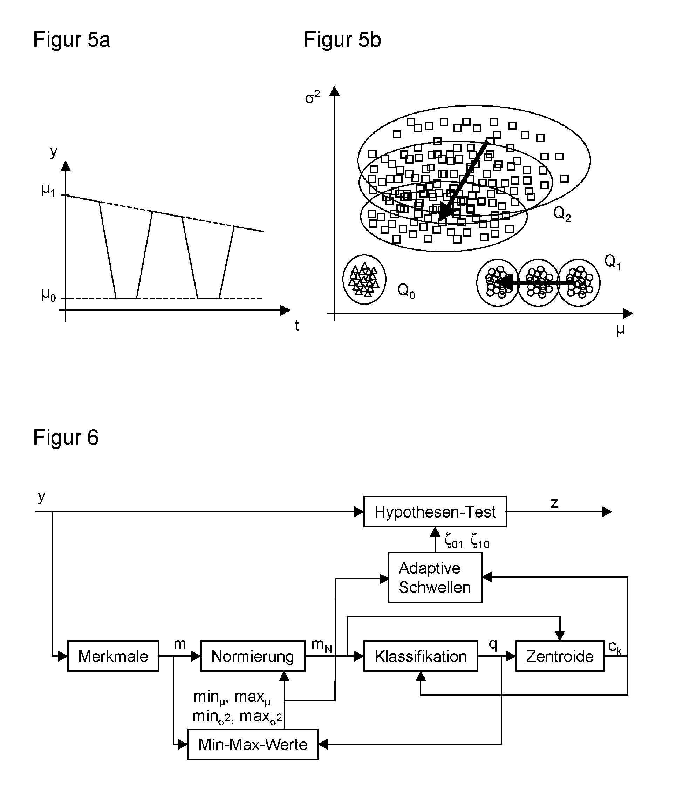

Tritt nun Verschmutzung, sei es langsam und kontinuierlich durch Verstauben oder sprunghaft durch Spritzer, oder ein anderer die Qualität des Empfangssignals beeinträchtigender Effekt auf, so verschiebt sich der Highlevel $\mu_1$ der Detektionsgröße y[i]. Dies ist in dem beispielhaften zeitlichen Verlauf der Detektionsgröße y der Figur 5a illustriert. Dabei überlagert sich den schnellen Transienten im Zustand $Q_2$ eine langsamer fallende Hüllkurve, die der Verschmutzung oder dem beeinträchtigenden Effekt geschuldet ist. Entsprechend verschieben sich auch die Cluster zumindest der Zustände $Q_1$ und $Q_2$, wie in Figur 5b gezeigt. Das ändert aber nichts an der Möglichkeit, die Zustände $Q_0$ bis $Q_2$ durch Klassifizierung auch unter solchen Effekten zu erkennen. Die Normierungsparameter werden dabei angepasst.

Auf Grund des Klassifikationsergebnisses werden nun angepasste Lowlevel $\mu_0$ und Highlevel $\mu_1$ als Mittelwerte der Zustände $Q_0$ und $Q_1$ geschätzt. Daran wird dann die Schaltschwelle angepasst, beispielsweise in der Mitte zwischen $\mu_0$ und $\mu_1$ oder nahe dem Highlevel $\mu_1$. Auch der Hystereseabstand kann an die neuen Werte angepasst werden. Wie in Figur 5b leicht ersichtlich, würde eine herkömmliche Schwellenadaption allein aufgrund des Empfangssignalpegels, welcher in etwa einer Projektion des Merkmalsraums auf die $\mu$-Achse entspricht, keinerlei Trennschärfe aufweisen. Die Anpassung der Schwelle würde auch die Transienten des Zustands Q2 ein- und ausfahrender Objekte 34 einbeziehen und entsprechend ungenaue Ergebnisse liefern.

Figur 6 zeigt zusammenfassend noch einmal das Gesamtsystem zur Klassifikation und Schwellenanpassung, welches die Detektionsgröße y durch einen Hypothesentest, beispielsweise eine Schwellbewertung mit zwei Hystereseschwellen $\zeta_{01}$, $\zeta_{10}$ in die binäre Ausgangsgröße z überführt. Aus der Detektionsgröße y werden dazu wie oben beschrieben Merkmale m extrahiert und mit Hilfe von Minima- und Maximawerten normiert. Die normierten Merkmalvektoren $m_N$ werden klassifiziert, indem sie iterativ dem jeweils nächstgelegenen Zentroid $c_k$ zugeordnet und dann die Zentroide $c_k$ neu berechnet werden. Das Ergebnis der Klassifikation wird daraufhin unter Berücksichtigung der neuen Minima- und Maximawerte genutzt, um die Hystereseschwellen $\zeta_{01}$, $\zeta_{10}$ anzupassen, die in dem Hypothesentest verwendet werden.

Während anhand der Figuren 2 bis 6 eine Objektdetektion mit Hilfe einer Schaltschwelle und die verbesserte Anpassung der Schaltschwelle durch Erkennen des Übergangszustands $Q_2$ beschrieben wurde, werden im Folgenden Schaltereignisse aus den Zuständen des Klassifikators 34 abgeleitet. Das dient anspruchsvollen Erkennungsaufgaben, wie etwa die zuverlässige Erfassung von transparenten Objekten. Dazu muss nicht, wie bisher beschrieben, ein Klassifikator in einem engeren Sinn verwendet werden. Die Zugehörigkeit zu einer Klasse kann vielmehr auch lediglich eine Lage in dem mehrdimensionalen Zustandsraum bezeichnen und beispielsweise durch mehrdimensionale Schwellen festgestellt werden.

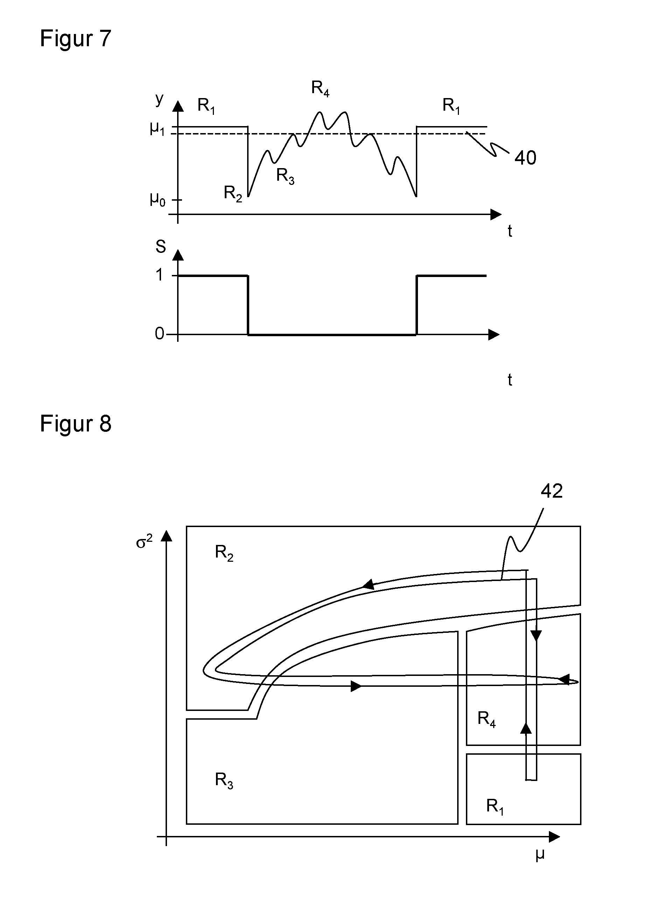

Figur 7 zeigt im oberen Teil beispielhaft und schematisch den Verlauf des Empfangssignals, wenn eine transparente, saubere, unbedruckte und mit einer transparenten Flüssigkeit gefüllte Kunststoff- oder Glasflasche den Lichtstrahl 14 durchquert. Eine klassische Schaltschwelle 40 wird für die Erkennung transparenter Objekte sehr nahe an den maximalen Signalpegel $\mu_1$ gelegt, weil die zu erkennende Dämpfung durch eine transparente Fläche relativ gering ist. Nun bildet aber die Flasche ein optisches Element, das den Strahlengang des Sensors 14 ähnlich einer Zylinderlinse beeinflusst. Die Zylinderform der Flasche kann also dazu führen, dass der nahezu parallele Strahlengang auf eine Brennlinie gebündelt wird. Damit wird der Signalpegel trotz Anwesenheit der Flasche in dem Lichtstrahl 14 oberschwellig und kann sogar höher werden als der Signalpegel $\mu_1$ bei objektfreiem Strahlengang.

Wenn außerdem die Ebene der Brennlinie mit dem Reflektor 24 zusammenfällt, führt dies zu einer Art Abscanvorgang des Reflektors 24 während der Bewegung der Flasche durch den Lichtstrahl 14. Dabei zeigen sich die Inhomogenitäten und aufstreuenden Grenzflächen zwischen einzelnen Reflektor-Tripeln als Schwankungen des Signalverlaufs.

Der Signalverlauf in Figur 7 zeigt deshalb unterschiedliche charakteristische Bereiche. In einer ersten Phase R1 ist der Strahlengang objektfrei, und das Signal y bleibt konstant auf dem Wert $\mu_1$. Beim Einfahren der Flasche in den Lichtstrahl 14 trifft dieser in einer Phase $R_2$ zunächst auf den linken oder rechten Rand der Flasche, die das Signal nahezu vollständig abschattet oder ablenkt, so dass es nahezu auf den minimalen Pegel $\mu_0$ bei abgedecktem Lichtstrahl 14 abfällt. In der anschließenden Phase R3 tritt der Lichtstrahl 14 durch die Mitte der Flasche, so dass das Signal y wieder ansteigt. Wegen der bereits genannten Unregelmäßigkeiten des Reflektors 24 weist dieser Anstieg einzelne Peaks auf, die beispielsweise jeweils einem Reflektortripel entsprechen. Der Signalanstieg kann im Extremfall in einer Phase $R_4$ den Empfangspegel $\mu_1$ bei objektfreiem Strahlengang erreichen oder sogar übertreffen. Dieser Effekt tritt vor allem dann auf, wenn der Reflektor 24 im Mittel weniger reflektiert als bei punktueller oder linienförmiger Beleuchtung. Würde man das Signal y gemäß Figur 7 mit der einfachen Schaltschwelle 40 bewerten, so ergäbe sich in der Phase R4 eine Fehldetektion beziehungsweise Fehlschaltung.

Gewünscht ist aber ein Schaltverhalten, wie es im unteren Teil der Figur 7 dargestellt ist. Das Schaltsignal für Objektanwesenheit soll demnach während der gesamten Bewegung der Flasche durch den Lichtstrahl 14 erzeugt werden.

Um das zu erreichen, wird wie schon in den zuvor anhand der Figuren 2 bis 6 beschriebenen Ausführungsformen ein mindestens zweidimensionaler Merkmalsraum verwendet, der von Mittelwert $\mu$ und Varianz $\sigma^2$ der Ereignisse y[t] aufgespannt wird. Figur 8 zeigt einen beispielhaften Merkmalsraum, in dem einzelne Bereiche oder Zustände $R_1$ bis $R_4$ entsprechend den Phasen $R_1$ bis $R_4$ der Figur 7 eingezeichnet sind. Mit Bezugszeichen 42 ist eine typische Trajektorie in dem Merkmalsraum bei Durchfahren des Lichtstrahls 14 mit der transparenten Flasche dargestellt.

Im objektfreien Zustand $R_1$ ist der Signalpegel hoch und die Varianz gering. Mit Eintreten der Flasche in den Lichtstrahl 14 im Zustand $R_2$ steigt zuerst die Varianz stark an, und kurz darauf sinkt der Signalpegel am Randbereich der Flasche ab. Wenn der Lichtstrahl 14 im Anschluss im Zustand $R_3$ durch die Mitte der Flasche tritt, zeigt sich das charakteristische Muster des Signalsverlaufs, welches durch die bereits erwähnte Tripelstruktur des Reflektors und durch die optischen Gegebenheiten wie Durchmesser, Position und Oberflächenstruktur der Flasche bestimmt ist. Dieses Muster weist eine hohe Varianz auf und kann damit sicher als Zustand erkannt werden. Wegen des Linseneffekts der Flasche kann je nach Reflektor 24 der Anstieg bis in einen Zustand $R_4$ führen, in dem Signalpegel wie bei objektfreiem Lichtstrahl 14 oder sogar darüber hinaus erreicht werden. Anschließend führt die Trajektorie in umgekehrter Richtung zurück in den objektfreien Zustand $R_1$.

Der Klassifikator 34 clustert die Merkmalsvektoren [$\mu_i$, $\sigma^2_i$] und erkennt somit das Vorliegen der Zustände $R_1$ bis $R_4$. Die Auswertungseinheit 32 entscheidet je nach Zustand über das Schaltsignal. In einer einfachen Ausführungsform wird dabei lediglich der Zustand $R_1$ erkannt, der beispielsweise durch eine untere Schwelle des Mittelwert $\mu$ und einer obere Schwelle der Varianz $\sigma^2$ definiert ist. Solange Zustand $R_1$ vorliegt, wird das Schaltsignal auf den binären Wert für objektfreien Strahlengang, sonst auf den anderen binären Wert für ein Objekt im Strahlengang gesetzt.

In einer anderen Ausführungsform wird die gesamte Abfolge der Zustände überwacht. In dem Beispiel der Figuren 7 und 8 etwa ist die Erwartung beim Durchtritt eine transparenten Flasche die Abfolge $R_1$, $R_2$, $R_3$, {$R_4$, $R_3$}, $R_2$, $R_1$. Dabei bedeuten die geschweiften Klammern eine Option, es ist also nicht zwingend erforderlich, dass wirklich hohe Signalpegel in der Größenordnung von $\mu_1$ erreicht werden. Wird diese Abfolge erkannt, so wird das auf den Durchtritt einer transparenten Flasche zurückgeführt, und der Schaltausgang schaltet beispielsweise in den Zuständen $R_2$-$R_4$.

Das Ableiten des Schaltsignals aus den Ergebnissen des Klassifikators hat gegenüber einer reinen Schwellbewertung des Signalpegels eine höhere Ansprechzeit, weil in die Mittelwerte und Varianzen mehrere Signalwerte einfließen. Dafür wird eine höhere Schaltzuverlässigkeit erreicht.

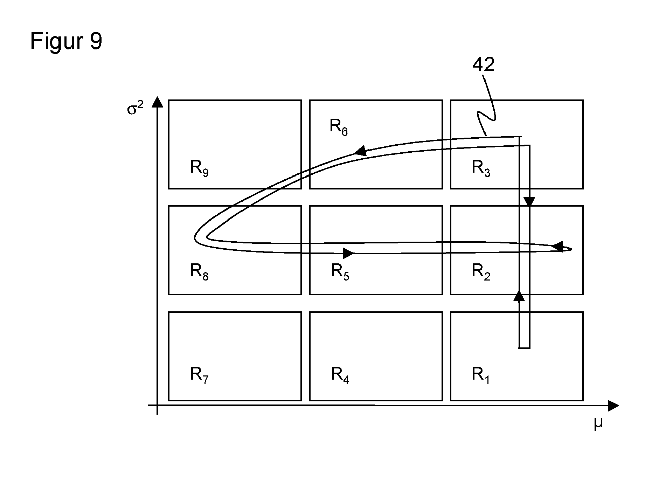

Figur 9 zeigt noch eine Alternative für die Aufteilung des Merkmalsraums. Dabei wird der Merkmalsraum ohne besondere inhaltliche Analyse der Trajektorie 42 in Zustände $R_1$ bis $R_9$ aufgeteilt. Beispielsweise werden gleich große, rechteckige Teilbereiche gebildet, deren Anzahl auch von der in Figur 9 gezeigten abweichen kann. Die Abfolge der Zustände bei Durchtritt eines zu erkennenden Objekts wird dann vorgegeben oder eingelernt. Anschließend wird den dabei auftretenden Zuständen ein passender Schaltzustand zugewiesen, oder die Auswertungseinheit 32 löst ein Schaltereignis aus, sobald eine bestimmte Abfolge von Zuständen erkannt ist.

**Patentansprüche**

1. Optoelektronischer Sensor (10), insbesondere Lichtschranke, mit einem Lichtsender (12) zum Aussenden eines Lichtstrahls (14) und einem Lichtempfänger (26) zum Erzeugen eines Empfangssignals aus dem empfangenen Lichtstrahl (14) sowie mit einer Auswertungseinheit (32), von der ein binäres Schaltsignal je nach Anwesenheit oder Abwesenheit eines Objekts (36) in einem von dem Lichtstrahl (14) überstrichenen Überwachungsbereich (22) ausgebbar ist, wobei die Auswertungseinheit (32) dafür ausgebildet ist, aus einer Zeitreihe (y[i]) des Empfangssignals Merkmalsvektoren (m[i]) eines mehrdimensionalen Merkmalsraums zu extrahieren, der von mindestens zwei, insbesondere den ersten beiden Momenten ($\mu$, $\sigma^2$) der Zeitreihe aufgespannt ist, **dadurch gekennzeichnet, dass** die Auswertungseinheit (32) dafür ausgebildet ist, mit einem Klassifikator (34) Zustände ($Q_0$-$Q_2$, $R_1$-$R_n$) in dem Merkmalsraum zu unterscheiden und aus den Zuständen das Schaltsignal abzuleiten.

2. Sensor (10) nach Anspruch 1, wobei dem Klassifikator (34) vorab die Anzahl der Zustände ($Q_k$) sowie für jeden Zustand ($Q_k$) ein Startwert, insbesondere in Form eines Zentroids ($c_k$) als Punkt in dem Merkmalsraum, vorgegeben ist.

3. Sensor (10) nach Anspruch 2, wobei der Klassifikator (34) die Merkmale (m[i]) jeweils demjenigen Zentroid ($c_k$) und damit dessen Zustand ($Q_k$) zuordnet, zu dem das Merkmal (m[i]) den kürzesten Abstand in dem Merkmalsraum aufweist und dann, wenn alle Merkmale (m[i]) einem Zentroid ($c_k$) zugeordnet sind, neue Zentroide ($c_k$) als Schwerpunkt aller jeweils einem bisherigen Zentroid ($c_k$) zugeordneten Merkmale (m[i]) bestimmt.

4. Sensor (10) nach einem der vorhergehenden Ansprüche, wobei der Klassifikator (34) dafür ausgebildet ist, in dem Merkmalsraum einen ersten Zustand ($Q_0$) mit von einem erfassten Objekt (36) abgedecktem Lichtstrahl (14), einen zweiten Zustand ($Q_1$) mit freiem Lichtstrahl (14) ohne erfasstes Objekt (36) und einen dritten Zustand ($Q_2$) für ein während des Ein- oder Ausfahrens in den Lichtstrahl (14) teilweise erfasstes Objekt (36) zu unterscheiden.

5. Sensor (10) nach Anspruch 4, wobei die Auswertungseinheit (32) dafür ausgebildet ist, das Empfangssignal mit einer Schaltschwelle zu bewerten und die Schaltschwelle adaptiv an die Lage der Merkmalsvektoren (m[i]) in dem ersten Zustand ($Q_0$) und/oder zweiten Zustand ($Q_1$) anzupassen, insbesondere die Schaltschwelle in die Mitte zwischen den Mittelwerten ($\mu_0$, $\mu_1$) der Merkmalsvektoren (m[i]) in dem ersten Zustand ($Q_0$) und dem zweiten Zustand ($Q_1$) oder nahe an den Mittelwert ($\mu_1$) der Merkmalsvektoren (m[i]) des zweiten Zustands ($Q_1$) zu legen.

6. Sensor (10) nach Anspruch 5, wobei die Schwellbewertung mit einer Hysterese ($\zeta_{01}$, $\zeta_{10}$) erfolgt, und wobei insbesondere die Auswertungseinheit (32) dafür ausgebildet ist, den Hystereseabstand ($\zeta_{01}$-$\zeta_{10}$) an die Lage der Merkmalsvektoren (m[i]) in dem ersten Zustand ($Q_0$) und/oder dem zweiten Zustand ($Q_1$) anzupassen.

7. Sensor (10) nach Anspruch 1, wobei die Auswertungseinheit (32) dafür ausgebildet ist, das Schaltsignal anhand einer Bewertung der Merkmalsvektoren (m[i]) mit einer mehrdimensionalen Schwelle aufzufinden.

8. Sensor (10) nach Anspruch 1, wobei der Klassifikator dafür ausgebildet ist, in dem Merkmalsraum zumindest einen ersten Zustand ($R_1$) mit freiem Lichtstrahl (14) ohne erfasstes Objekt (36) bei einem ersten Moment ($\mu$) der Zeitreihe (y[i]) nahe einem maximalen Empfangspegel und einem kleinen zweiten Moment ($\sigma$) der Zeitreihe (y[i]) zu identifizieren, und wobei von der Auswertungseinheit (32) als binäres Schaltsignal das Vorliegen oder Nichtvorliegen des ersten Zustands ($R_1$) ausgebbar ist.

9. Sensor (10) nach Anspruch 1, wobei der Klassifikator (34) dafür ausgebildet ist, in dem Merkmalsraum mehrere Bereiche jeweils einem Zustand ($R_1$-$R_n$) zuzuordnen, wobei die Aus-

wertungseinheit (32) eine vorgegebene Abfolge der Zustände ($R_1$-$R_n$) erwartet und das binäre Schaltsignal in Abhängigkeit davon ausgibt, welche Teilsequenz der Abfolge momentan durchlaufen wird.

10. Sensor (10) nach Anspruch 9,
wobei der Klassifikator (34) dafür ausgebildet ist, den Merkmalsraum bis zu einem maximalen ersten Moment ($\mu$) und einem maximalen zweiten Moment ($\sigma$) in Bereiche zu unterteilen, insbesondere rechteckige Bereiche, und jedem Bereich einen Zustand ($R_1$-$R_n$) zuzuordnen.

11. Verfahren zur Ausgabe eines binären Schaltsignals je nach Anwesenheit oder Abwesenheit eines Objekts (36) in einem Lichtstrahl (14), der von einem Lichtsender (12) ausgesandt und von einem Lichtempfänger (26) direkt oder über einen Reflektor (24) wieder empfangen wird, wobei das Objekt (36) in dem Lichtstrahl (14) anhand einer Strahlunterbrechung erkannt wird, wobei aus einer Zeitreihe (y[i]) eines Empfangssignals des Lichtempfängers (26) Merkmalsvektoren (m[i]) eines mehrdimensionalen Merkmalsraums extrahiert werden, der von mindestens zwei, insbesondere den ersten beiden Momenten ($\mu$, $\sigma^2$) der Zeitreihe aufgespannt wird,
**dadurch gekennzeichnet,**
**dass** ein Klassifikator (34) Zustände ($Q_0$-$Q_2$, $R_1$-$R_n$) in dem Merkmalsraum unterscheidet und aus den Zuständen das Schaltsignal abgeleitet wird.

12. Verfahren nach Anspruch 11,
wobei der Klassifikator (34) ausgehend von einer vorgegebenen Anzahl der Zustände ($Q_k$) und einem Startwert in Form eines Zentroids ($c_k$) als Punkt in dem Merkmalsraum die folgenden Schritte solange iteriert, bis eine Mindestzahl von Iterationsschritten erreicht ist oder die Zentroide ($c_k$) sich nach einem Iterationsschritt nur noch um weniger als einen Höchstabstand verschieben:

- ordne jeden Merkmalsvektor (m[i]) demjenigen Zentroid ($c_k$) und damit dessen Zustand ($c_k$) zu, zu dem der Merkmalsvektor (m[i]) den kürzesten Abstand in dem Merkmalsraum aufweist
- bestimme, nachdem alle Merkmalsvektoren (m[i]) einem Zentroid ($c_k$) zugeordnet sind, neue Zentroide ($c_k$) als Schwerpunkt aller jeweils einem bisherigen Zentroid ($c_k$) zugeordneten Merkmalsvektoren (m[i]),

wobei der Klassifikator (34) einen ersten Zustand ($Q_0$) mit von einem erfassten Objekt (36) abgedecktem Lichtstrahl (14), einen zweiten Zustand ($Q_1$) mit freiem Lichtstrahl (14) ohne erfasstes Objekt (36) und einen dritten Zustand ($Q_2$) für ein während des Ein- oder Ausfahrens in den Lichtstrahl (14) teilweise erfasstes Objekt (36) unterscheidet

und/oder wobei das Empfangssignal mit einer Schaltschwelle bewertet und die Schaltschwelle adaptiv an die Lage der Merkmalsvektoren (m[i]) in dem ersten Zustand ($Q_0$) und/oder dem zweiten Zustand ($Q_1$) angepasst wird, wobei insbesondere die Schwellbewertung mit einer Hysterese ($\zeta_{01}$, $\zeta_{10}$) erfolgt und auch der Hystereseabstand ($\zeta_{01}$-$\zeta_{10}$) an die Lage der Merkmalsvektoren (m[i]) in dem ersten Zustand ($Q_0$) und/oder zweiten Zustand ($Q_1$) angepasst wird.

13. Verfahren nach Anspruch 11,
wobei die Merkmalsvektoren m([i]) mit einer mehrdimensionalen Schwelle bewertet werden, um das Schaltsignal aufzufinden.

14. Verfahren nach Anspruch 11,
wobei ein Klassifikator (34) Zustände ($Q_0$-$Q_2$, $R_1$-$R_n$) in dem Merkmalsraum unterscheidet und aus den Zuständen das Schaltsignal abgeleitet wird, wobei der Klassifikator (34) in dem Merkmalsraum zumindest einen ersten Zustand ($R_1$) mit freiem Lichtstrahl (14) ohne erfasstes Objekt (36) bei einem ersten Moment ($\mu$) der Zeitreihe (y[i]) nahe einem maximalen Empfangspegel und einem kleinen zweiten Moment ($\sigma$) der Zeitreihe (y[i]) identifiziert, und wobei als binäres Schaltsignal das Vorliegen oder Nichtvorliegen des ersten Zustands ($R_1$) ausgegeben wird, wobei der Klassifikator (34) in dem Merkmalsraum mehrere Bereiche jeweils einem Zustand ($R_1$-$R_n$) zuordnet, insbesondere den Merkmalsraum bis zu einem maximalen ersten Moment ($\mu$) und einem maximalen zweiten Moment ($\sigma$) in Bereiche unterteilt und jedem Bereich einen Zustand ($R_1$-$R_n$) zuordnet, wobei eine vorgegebene Abfolge der Zustände erwartet und das binäre Schaltsignal in Abhängigkeit davon ausgegeben wird, welche Teilsequenz der Abfolge momentan durchlaufen wird.

**Claims**

1. An optoelectronic sensor (10), in particular a light barrier, having a light transmitter (12) for transmitting a light beam (14), having a light receiver (26) for generating a received signal from the received light beam (14) and having an evaluation unit (32) from which a binary switching signal can be output, each in dependence on the presence or the absence of an object (36), in a monitored zone (22) scanned by the light beam (14), wherein the evaluation unit (32) is configured to extract feature vectors (m[i]) of a multi-dimensional feature space from a series in time (y[i]) of the received signal, with the feature space being spanned by at least two, in particular by the first two, moments ($\mu$, $\sigma^2$) of the series in time, **characterised in that**, the evaluation unit (32) is configured to distinguish

states ($Q_0$-$Q_2$, $R_1$-$R_n$) in the feature space using a classifier (34) and to derive the switching signal from the states.

2. A sensor (10) in accordance with claim 1, wherein the number of states ($Q_k$) and a starting value for each state ($Q_k$), in particular in the form of a centroid ($c_k$) as a point in the feature space, is predefined in advance for the classifier (34).

3. A sensor (10) in accordance with claim 2, wherein the classifier (34) associates the features (m[i]) with that respective centroid ($c_k$), and thus with its state ($Q_k$), to which the feature (m[i]) has the shortest spacing in the feature space and then, when all features (m[i]) are associated with a centroid ($c_k$), the classifier determines new centroids ($c_k$) as the barycentre of all features (m[i]) associated with a respective one previous centroid ($c_k$).

4. A sensor (10) in accordance with any one of the preceding claims, wherein the classifier (34) is configured to distinguish, in the feature space, a first state ($Q_0$) having a light beam (14) covered by a detected object (36), a second state ($Q_1$) having a free light beam (14) without a detected object (36) and a third state ($Q_2$) for an object (36) partly detected during the moving into or moving out of the light beam (14).

5. A sensor (10) in accordance with claim 4, wherein the evaluation unit (32) is configured to assess the received signal using a switching threshold and to adjust the switching threshold adaptively to the position of the feature vectors (m[i]) in the first state ($Q_0$) and/or in the second state ($Q_1$), in particular to place the switching threshold into the centre between the mean values ($\mu_0$, $\mu_1$) of the feature vectors (m[i]) in the first state ($Q_0$) and in the second state ($Q_1$) or close to the mean value ($\mu_1$) of the feature vectors (m[i]) of the second state ($Q_1$).

6. A sensor (10) in accordance with claim 5, wherein the threshold assessment takes place with a hysteresis ($\zeta_{01}$, $\zeta_{10}$) and wherein the evaluation unit (32) is in particular configured to adjust the hysteresis spacing ($\zeta_{01}$-$\zeta_{10}$) with respect to the position of the feature vectors (m[i]) in the first state ($Q_0$) and/or in the second state ($Q_1$).

7. A sensor (10) in accordance with claim 1, wherein the evaluation unit (32) is configured to locate the switching signal on the basis of an assessment of the feature vectors (m[i]) by means of a multidimensional threshold.

8. A sensor (10) in accordance with claim 1, wherein the classifier is configured to identify at least

one first state ($R_1$) having a free light beam (14) without a detected object (36) at a first moment ($\mu$) of the series in time (y[i]) approximate to a maximum reception level and at a small second moment ($\sigma$) of the series in time (y[i]) in the feature space and wherein the presence or the absence of the first state ($R_1$) can be output from the evaluation unit (32) as a binary switching signal.

9. A sensor (10) in accordance with claim 1, wherein the classifier (34) is configured to associate a plurality of regions with a respective one state ($R_1$-$R_n$) in the feature space, wherein the evaluation unit (32) expects a predefined sequence of the states ($R_1$-$R_n$) and outputs the binary switching signal in dependence thereof which part sequence of the sequence is currently being run through.

10. A sensor (10) in accordance with claim 9, wherein the classifier (34) is configured to divide the feature space up to a maximum first moment ($\mu$) and a maximum second moment ($\sigma$) into regions, in particular into rectangular regions, and to associate a state ($R_1$-$R_n$) with each region.

11. A method for outputting a binary switching signal each in dependence on the presence or absence of an object (36) in a light beam (14) which is transmitted by a light transmitter (12) and which is received again by a light receiver (26) directly or via a reflector (24), wherein the object (36) in the light beam (14) is recognised on the basis of a beam interruption and wherein feature vectors (m[i]) of a multi-dimensional feature space are extracted from a series in time (y[i]) of a received signal of the light receiver (26), with the feature space being spanned by at least two, in particular by the first two, moments ($\mu$, $\sigma^2$) of the series in time,
**characterised in that**,
a classifier (34) distinguishes states ($Q_0$-$Q_2$, $R_1$-$R_n$) in the feature space and the switching signal is derived from the states.

12. A method in accordance with claim 11, wherein the classifier (34), starting from a predefined number of states ($Q_k$) and from a starting value in the form of a centroid ($c_k$) as a point in the feature space, iterates the following steps until a minimum number of iteration steps have been reached or until the centroids ($c_k$) are only displaced by less than a maximum distance after an iteration step:

- associate each feature vector (m[i]) with that centroid ($c_k$), and thus with its state ($c_k$), to which the feature vector (m[i]) has the shortest spacing in the feature space;
- determine, after all feature vectors (m[i]) have been associated with a centroid ($c_k$), new cen-

troids ($c_k$) as the barycentre of all feature vectors (m[i]) associated with a respective one previous centroid ($c_k$),

wherein the classifier (34) distinguishes a first state ($Q_0$) having a light beam (14) covered by a detected object (36), a second state ($Q_1$) having a free light beam (14) without a detected object (36) and a third state ($Q_2$) for an object partly detected during a moving into or a moving out of the light beam (14); and/or wherein the received signal is assessed using a switching threshold and the switching threshold is adaptively adjusted to the position of the feature vectors (m[i]) in the first state ($Q_0$) and/or in the second state ($Q_1$), wherein the threshold assessment in particular takes place with a hysteresis ($\zeta_{01}$, $\zeta_{10}$) and the hysteresis spacing ($\zeta_{01}$-$\zeta_{10}$) is also adjusted to the position of the feature vectors (m[i]) in the first state ($Q_0$) and/or in the second state ($Q_1$).

13. A method in accordance with claim 11, wherein the feature vectors m([i]) are assessed using a multi-dimensional threshold in order to locate the switching signal.

14. A method in accordance with claim 11, wherein a classifier (34) distinguishes states ($Q_0$-$Q_2$, $R_1$-$R_n$) in the feature space and a switching signal is derived from the states, wherein, in the feature space, the classifier (34) identifies at least one first state ($R_1$) having a free light beam (14) without a detected object (36) at a first moment ($\mu$) of the series in time (y[i]) approximate to a maximum reception level and at a small second moment ($\sigma$) of the series in time (y[i]); and wherein the presence or the absence of the first state ($R_1$) is output as a binary switching signal, wherein the classifier (34) associates a plurality of regions with a respective one state ($R_1$-$R_n$) in the feature space, in particular divides the feature space up to a maximum first moment ($\mu$) and a maximum second moment ($\sigma$) into regions and associates a state ($R_1$-$R_n$) with each region, with a predefined sequence of the states being expected and the binary switching signal being output in dependence on which part sequence of the sequence is currently being run through.

**Revendications**

1. Capteur optoélectronique (10), en particulier barrière lumineuse, comprenant un émetteur de lumière (12) pour émettre un rayon de lumière (14) et un récepteur de lumière (26) pour engendrer un signal de réception à partir du rayon de lumière (14) reçu, et comprenant une unité d'évaluation (32) depuis laquelle un signal de commutation binaire peut être délivré selon la présence ou l'absence d'un objet (36) dans une zone de surveillance (22) balayée par le rayon de lumière (14), dans lequel l'unité d'évaluation (32) est réalisée pour extraire, à partir d'une série temporelle (y[i]) du signal de réception, des vecteurs caractéristiques (m[i]) d'un espace de caractéristiques à plusieurs dimensions, qui est couvert par au moins deux moments, en particulier les deux premiers moments ($\mu$, $\sigma2$) de la série temporelle, **caractérisé en ce que** l'unité d'évaluation (32) est réalisée pour distinguer, avec un classificateur (34), des états ($Q_0$-$Q_2$, $R_1$-$R_n$) dans l'espace de caractéristiques, et pour dériver le signal de commutation à partir des états.

2. Capteur (10) selon la revendication 1, dans lequel le nombre des états ($Q_k$) ainsi qu'une valeur de départ pour chaque état ($Q_k$), en particulier sous la forme d'un centroïde ($C_k$) est imposé(e) préalablement au classificateur (34), à titre de point dans l'espace de caractéristiques.

3. Capteur (10) selon la revendication 2, dans lequel le classificateur (34) associe les caractéristiques (m[i]) respectivement au centroïde ($C_k$), et ainsi à son état ($Q_k$), auquel la caractéristique (m[i]) présente la plus courte distance dans l'espace de caractéristiques et ensuite, quand toutes les caractéristiques (m[i]) sont associées à un centroïde ($C_k$), il détermine de nouveaux centroïdes ($C_k$) à titre de centre de gravité de toutes les caractéristiques (m[i]) associées jusqu'ici respectivement à un centroïde ($C_k$).

4. Capteur (10) selon l'une des revendications précédentes, dans lequel le classificateur (34) est réalisé pour distinguer dans l'espace de caractéristique un premier état ($Q_0$) avec un rayon de lumière (14) masqué par un objet détecté (36), un second état ($Q_1$) avec un rayon de lumière libre (14) sans objet détecté (36), et un troisième état ($Q_2$) pour un objet (36) partiellement détecté pendant l'introduction dans le rayon de lumière (14) ou l'extraction hors de celui-ci.

5. Capteur (10) selon la revendication 4, dans lequel l'unité d'évaluation (32) est réalisée pour évaluer le signal de réception avec un seuil de commutation et pour ajuster le seuil de commutation de manière adaptative à la situation des vecteurs caractéristiques (m[i]) dans le premier état ($Q_0$) et/ou dans le second état ($Q_1$), en particulier pour placer le seuil de commutation au milieu entre les valeurs moyennes ($m_0$, $m_1$) des vecteurs caractéristiques (m[i]) dans le premier état ($Q_0$) et le second état ($Q_1$) ou à proximité de la valeur moyenne ($m_1$) des vecteurs caractéristiques (m[i]) du second état ($Q_1$)).

6. Capteur (10) selon la revendication 5,

dans lequel l'évaluation du seuil a lieu avec une hystérésis ($\zeta_{01}$, $\zeta_{10}$), et dans lequel l'unité d'évaluation (32) est en particulier réalisée pour ajuster l'écart d'hystérésis ($\zeta_{01}$, $\zeta_{10}$) à la position des vecteurs caractéristiques (m[i]) dans le premier état ($Q_0$) et/ou le second état ($Q_1$).

7. Capteur (10) selon la revendication 1, dans lequel l'unité d'évaluation (32) est réalisée pour calculer le signal de commutation au moyen d'une évaluation des vecteurs caractéristiques (m[i]) avec un seuil à plusieurs dimensions.

8. Capteur (10) selon la revendication 1, dans lequel le classificateur est réalisé pour identifier dans l'espace de caractéristiques au moins un premier état ($R_1$) avec un rayon de lumière libre (14) sans objet détecté (36) à un premier moment ($\mu$) de la série temporelle (y[i]) à proximité d'un niveau de réception maximum et à un second moment plus petit ($_s$) de la série temporelle (y[i]), et dans lequel la présence ou l'absence du premier état ($R_1$) peut être délivrée par l'unité d'évaluation (32) à titre de signal de commutation binaire.

9. Capteur (10) selon la revendication 1, dans lequel le classificateur (34) est réalisé pour associer, dans l'espace de caractéristiques, plusieurs zones respectivement à un état ($R_1$-$R_n$), dans lequel l'unité d'évaluation (32) attend une succession prédéterminée des états ($R_1$-$R_n$) et délivre le signal de commutation binaire en fonction de la séquence partielle de la succession qui est momentanément traversée.

10. Capteur (10) selon la revendication 9, dans lequel le classificateur (34) est réalisé pour subdiviser l'espace de caractéristiques jusqu'à un premier moment maximum ($\mu$) et jusqu'à un second moment maximum ($\sigma$) en zones, en particulier en zones rectangulaires, et pour associer un état ($R_1$-$R_n$) à chaque zone.

11. Procédé pour délivrer un signal de commutation binaire selon la présence ou l'absence d'un objet (36) dans un rayon de lumière (14), qui est émis par un émetteur de lumière (12) et qui est reçu par un récepteur de lumière (26) soit directement soit via un réflecteur (24), dans lequel l'objet (36) est reconnu dans le rayon de lumière (14) au moyen d'une interruption du rayon, dans lequel on extrait à partir d'une série temporelle (y[i]) d'un signal de réception du récepteur de lumière (26), des vecteurs caractéristiques (m[i]) d'un espace de caractéristiques à plusieurs dimensions, qui est couvert par au moins deux moments, en particulier les deux premiers moments ($\mu$, $\sigma 2$) de la série temporelle, **caractérisé en ce qu'**un classificateur (34) distingue des états ($Q_0$-$Q_2$, $R_1$-$R_n$) dans l'espace de caractéristiques, et délivre un signal de commutation à partir des états.

12. Procédé selon la revendication 11, dans lequel, en partant d'un nombre prédéterminé des états ($Q_k$) et d'une valeur de départ sous la forme d'un centroïde ($C_k$) à titre de point dans l'espace de caractéristiques, le classificateur (34) exécute les étapes suivantes par itération, jusqu'à atteindre un nombre minimum d'étapes d'itération ou jusqu'à ce que les centroïdes ($C_k$) ne se déplacent plus que d'une valeur inférieure à un écart maximum après une étape d'itération :

   - il associe chaque vecteur caractéristique (m[i]) au centroïde ($C_k$) et ainsi à son état ($C_k$) pour lequel le vecteur caractéristique (m[i]) présente l'écart le plus court dans l'espace de caractéristiques,
   - il détermine, après avoir associé tous les vecteurs caractéristiques (m[i]) à un centroïde ($C_k$), des nouveaux centroïdes ($C_k$) à titre de centre de gravité de tous les vecteurs caractéristiques (m[i]) associés respectivement jusqu'ici à un centroïde ($C_k$),

dans lequel le classificateur (34) distingue un premier état ($Q_0$) avec un rayon de lumière (14) masqué par un objet détecté (36), un second état ($Q_1$) avec un rayon de lumière libre (14) sans objet détecté (36), et un troisième état ($Q_2$) pour un objet (36) partiellement détecté pendant l'introduction dans le rayon de lumière (14) ou l'extraction hors de celui-ci, et/ou dans lequel le signal de réception est évalué avec un seuil de commutation et le seuil de commutation est ajusté de manière adaptative à la position des vecteurs caractéristiques (m[i]) dans le premier état ($Q_0$) et/ou dans le second état ($Q_1$), dans lequel en particulier l'évaluation du seuil a lieu avec une hystérésis ($\zeta_{01}$, $\zeta_{10}$), et l'écart d'hystérésis ($\zeta_{01}$, $\zeta_{10}$) est également ajusté à la position des vecteurs caractéristiques (m[i]) dans le premier état ($Q_0$) et/ou dans le second état ($Q_1$).

13. Procédé selon la revendication 11, dans lequel les vecteurs caractéristiques (m([i]) sont calculées avec un seuil à plusieurs dimensions, afin de trouver le signal de commutation.

14. Procédé selon la revendication 11, dans lequel un classificateur (34) distingue des états ($Q_0$-$Q_2$, $R_1$-$R_n$) dans l'espace de caractéristiques et dérive à partir des états le signal de commutation, dans lequel le classificateur (34) identifie dans l'espace de caractéristiques au moins un premier état ($R_1$) avec un rayon de lumière libre (14) sans objet détecté (36) à un premier moment ($\mu$) de la série

temporelle (y[i]) à proximité d'un niveau de réception maximum, et à un second moment ($\sigma$) plus petit de la série temporelle (y[i]), et dans lequel la présence ou l'absence du premier état ($R_1$) est délivrée à titre de signal de commutation binaire, dans lequel le classificateur (34) associe dans l'espace de caractéristiques plusieurs zones respectivement à un état ($R_1$-$R_n$), en particulier il subdivise l'espace de caractéristiques jusqu'à un premier moment maximum ($\mu$) et jusqu'à un second moment maximum ($\sigma$) en zones, et associe à chaque zone un état ($R_1$-$R_n$), dans lequel on attend une succession prédéterminée des états et le signal de commutation binaire est délivré en fonction de la séquence partielle de la succession qui est momentanément traversée.

Figur 1

Figur 2

Figur 3

Figur 4

## Figur 5a

## Figur 5b

## Figur 6

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0891044 B1

- EP 2199822 A1

**In der Beschreibung aufgeführte Nicht-Patentliteratur**

- **CH. BISHOP.** Pattern Recognition and Machine Learning. Springer, 2006

- **R. DUDA et al.** Pattern Classification. Wiley, 2001